# DEMANDE DE BREVET EUROPEEN

(11) **EP 4 803 762 A1**
(43) Date de publication de la demande: **09.09.2026**
(21) Numéro de dépôt: 26160119.9
(22) Date de dépôt: 23.02.2026
(51) Int. Cl.: F16B 45/02

(54) **MOUSQUETON ET PROCÉDÉ D'UTILISATION**

(30) Priorité: 03.03.2025 FR 2502109
(71) Demandeur: Zedel, 38920 Crolles (FR)
(72) Inventeur: QUILLARD, Christophe, 38320 EYBENS (FR); MATHE, Olivier, 74440 TANINGES (FR); MAURICE, Alain, 38660 LE PLATEAU DES PETITES ROCHES (FR)
(74) Mandataire: Talbot, Alexandre

(57) **Abrégé**

Un mousqueton (1) comporte un corps (2) possédant une première extrémité (2') et une deuxième extrémité (2") ainsi qu'un doigt (3). Le doigt (3) étant monté mobile à pivotement par rapport au corps (2), le doigt (3) étant mobile entre une position ouverte et une position fermée. Un dispositif de verrouillage (4) présente une position verrouillée et une position déverrouillée. Dans la position déverrouillée, le doigt (3) est libre de se déplacer entre la position ouverte et la position fermée. Lorsque le doigt (3) est en position fermée, le basculement du dispositif de verrouillage (4) de la position déverrouillée à la position verrouillée maintient le doigt (3) dans la position fermée. Lorsque le doigt (3) est dans la position ouverte, le basculement du dispositif de verrouillage (4) de la position déverrouillée à la position verrouillée maintient le doigt (3) dans la position ouverte.

## Description

### Domaine technique

L'invention concerne un mousqueton et un procédé d'utilisation d'un mousqueton.

### État de la technique

Il est connu différentes configurations de mousquetons qui possèdent un corps en forme de « C » et un doigt monté mobile à pivotement pour définir une position ouverte et une position fermée.

Afin d'éviter l'ouverture non-intentionnelle du doigt, il existe plusieurs configurations différentes de systèmes de blocage qui sont configurés pour bloquer le doigt dans la position fermée.

Pour bloquer le doigt en position fermée, il est connu de former un doigt muni d'une virole qui se visse le long du doigt. Le vissage de la virole au moyen de plusieurs tours permet de maintenir le doigt en position fermée. Cette configuration empêche le doigt d'atteindre la position fermée lorsque le doigt était initialement en position ouverte. La demanderesse commercialise des mousquetons qui sont munis d'un tel système de blocage sous la dénomination « SCREW-LOCK ».

Il existe également des systèmes de blocage qui sont accrochés au doigt qui possèdent des mouvements plus complexes pour quitter la position fermée et autoriser un mouvement du doigt vers la position ouverte. La demanderesse commercialise des mousquetons qui sont munis d'un tel système de blocage sous la dénomination « TRIACT-LOCK », « BALL-LOCK », « PIN-LOCK », « TWIST-LOCK » ou « WIRE-LOCK ».

Il est également connu une barrette qui se fixe d'une part au doigt et d'autre part au corps afin de figer le doigt dans la position fermée. La demanderesse commercialise des mousquetons qui sont munis d'un tel système de blocage sous la dénomination « CAPTIV ». Un mode de réalisation est présenté dans le document US 2016/0281766.

D'autres configurations de systèmes de blocage configurés pour bloquer le doigt en position fermée sont illustrées dans les documents WO 2005/073571, GB 2481800, EP 2538095, US 2005/0229367.

Il ressort qu'à l'usage, l'utilisation d'un système de blocage qui permet de bloquer le doigt dans la position fermée ne fournit pas un fonctionnement satisfaisant, notamment pour l'introduction d'un équipement dans le mousqueton. De nombreux systèmes de blocage possèdent une position de blocage par défaut ce qui complique l'introduction d'un équipement. Il existe également des systèmes de blocage qui réduisent le volume accessible à l'intérieur du mousqueton.

### Exposé de l'invention

Un objet de l'invention consiste à pallier ces inconvénients, et plus particulièrement à fournir un mousqueton qui facilite l'introduction d'un équipement dans le mousqueton tout en permettant de bloquer le mousqueton dans la position fermée.

On tend à résoudre ces inconvénients au moyen d'un mousqueton comportant :
- un corps possédant une première extrémité et une deuxième extrémité ;
- un doigt, le doigt étant monté mobile à pivotement par rapport au corps, le doigt étant mobile entre une position ouverte et une position fermée ;
- un dispositif de verrouillage présentant une position verrouillée et une position déverrouillée ;

dans lequel, dans la position déverrouillée, le doigt est libre de se déplacer entre la position ouverte et la position fermée ;
dans lequel, lorsque le doigt est en position fermée, le basculement du dispositif de verrouillage de la position déverrouillée à la position verrouillée maintient le doigt dans la position fermée.

Le mousqueton est remarquable en ce que lorsque le doigt est dans la position ouverte, le basculement du dispositif de verrouillage de la position déverrouillée à la position verrouillée maintient le doigt dans la position ouverte.

Selon un aspect de l'invention, le dispositif de verrouillage est accroché au doigt et suit le déplacement le doigt entre la position ouverte et la position fermée.

De manière préférentielle, lorsque le doigt est dans la position ouverte, le dispositif de verrouillage dans la position verrouillée applique un effort sur la première extrémité du corps.

Dans un mode de réalisation particulier, le dispositif de verrouillage est monté pivotant entre la position verrouillée et la position déverrouillée autour d'un axe qui relie une première extrémité du doigt et une deuxième extrémité du doigt. Le dispositif de verrouillage définit un crochet s'accrochant à la première extrémité du corps lorsque le doigt est dans la position ouverte.

Avantageusement, lorsque le dispositif de verrouillage est en position verrouillée, le crochet possède une paroi externe destinée à venir en appui contre une paroi interne du corps pour empêcher un déplacement du doigt de la position fermée à la position ouverte. Une paroi interne du crochet vient en appui contre la première extrémité du corps pour empêcher un déplacement du doigt de la position ouverte à la position fermée.

Dans un mode de réalisation particulier, la première extrémité du corps définit un trou recevant le crochet lorsque le dispositif de verrouillage est dans la position verrouillée et lorsque le doigt est dans la position ouverte.

Préférentiellement, le crochet pivote d'un premier angle entre la position déverrouillée et la position verrouillée lorsque le doigt est dans la position fermée. Le crochet pivote d'un deuxième angle entre la position déverrouillée et la position verrouillée lorsque le doigt est dans la position fermée, le premier angle étant supérieur au deuxième angle.

Dans un autre développement, le dispositif de verrouillage présente un état instable entre la position verrouillée et la position déverrouillée, le dispositif de verrouillage possédant un ressort sollicitant une virole et le doigt pour quitter la position instable vers la position verrouillée ou la position déverrouillée.

Avantageusement, la première extrémité du corps forme une butée, le ressort appliquant un effort sur la première extrémité du corps lorsque le doigt est en position ouverte.

Préférentiellement, la première extrémité du corps forme une butée de fin de course configurée pour limiter l'angle d'ouverture du doigt dans la position ouverte, la butée de fin de course étant en contact du doigt ou du dispositif de verrouillage.

L'invention a également pour objet un procédé d'utilisation d'un mousqueton qui est efficace et qui permet un fonctionnement amélioré.

On tend à atteindre ce résultat au moyen d'un procédé d'utilisation d'un mousqueton comportant les étapes suivantes :
- fournir un mousqueton selon l'une quelconque des configurations précédentes ;
- placer le dispositif de verrouillage dans la position verrouillée lorsque le doigt dans la position ouverte afin de bloquer le doigt dans la position ouverte.

### Description des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
[Fig. 1] : illustre schématiquement une vue en perspective d'un premier mode de réalisation d'un mousqueton avec le doigt en position fermée et le dispositif de verrouillage en position déverrouillée ;
[Fig. 2] : illustre schématiquement une vue côté du premier mode de réalisation d'un mousqueton avec le doigt en position fermée et le dispositif de verrouillage en position déverrouillée ;
[Fig. 3] : illustre schématiquement une vue en perspective d'un premier mode de réalisation d'un mousqueton avec le doigt en position fermée et le dispositif de verrouillage en position verrouillée ;
[Fig. 4] : illustre schématiquement une vue côté du premier mode de réalisation d'un mousqueton avec le doigt en position fermée et le dispositif de verrouillage en position verrouillée ;
[Fig. 5] : illustre schématiquement une vue en perspective du premier mode de réalisation d'un mousqueton avec le doigt en position ouverte et le dispositif de verrouillage en position déverrouillée ;
[Fig. 6] : illustre schématiquement une vue en perspective du premier mode de réalisation d'un mousqueton avec le doigt en position ouverte et le dispositif de verrouillage en position verrouillée ;
[Fig. 7] : illustre schématiquement une vue de côté du premier mode de réalisation d'un mousqueton avec le doigt en position ouverte et le dispositif de verrouillage en position verrouillée ;
[Fig. 8] : illustre schématiquement une vue en coupe du mousqueton avec le doigt en position fermée et le dispositif de verrouillage en position déverrouillée selon le plan de coupe AA de la figure 2 ;
[Fig. 9] : illustre schématiquement une vue en coupe du mousqueton avec le doigt en position fermée et le dispositif de verrouillage en position verrouillée selon le plan de coupe AA de la figure 4 ;
[Fig. 10] : illustre schématiquement une vue de dessous d'une virole du système de verrouillage ;
[Fig. 11] : illustre schématiquement une vue en coupe longitudinale de la virole du système de verrouillage ;
[Fig. 12] : illustre schématiquement une vue de dessus du doigt ;
[Fig. 13] : illustre schématiquement une vue en coupe longitudinale du doigt ;
[Fig. 14] : illustre schématiquement une vue d'un harnais d'encordement muni d'un élément filaire apte à accrocher le mousqueton.

### Description détaillée

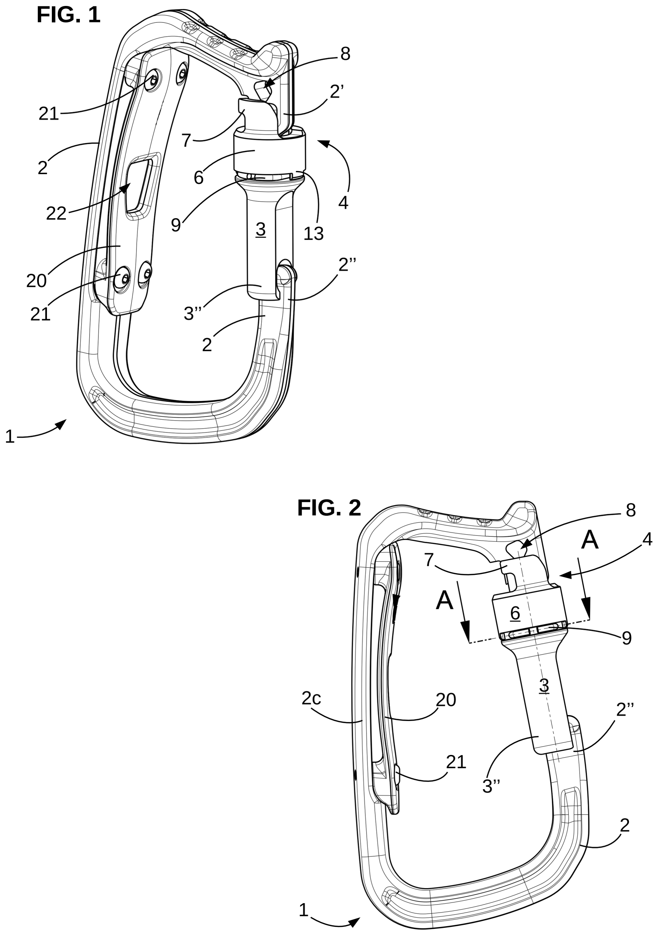

Les figures 1 à 7 illustrent un mousqueton 1 dans la position ouverte ou dans la position fermée. Le mousqueton 1 possède un corps 2 et un doigt 3. Le corps 2 se présente sous la forme d'un « C » ou d'un « U » et il s'étend d'une première extrémité 2' à une deuxième extrémité 2". Le corps 2 définit une ouverture et le doigt 3 est monté mobile à pivotement par rapport au corps 2.

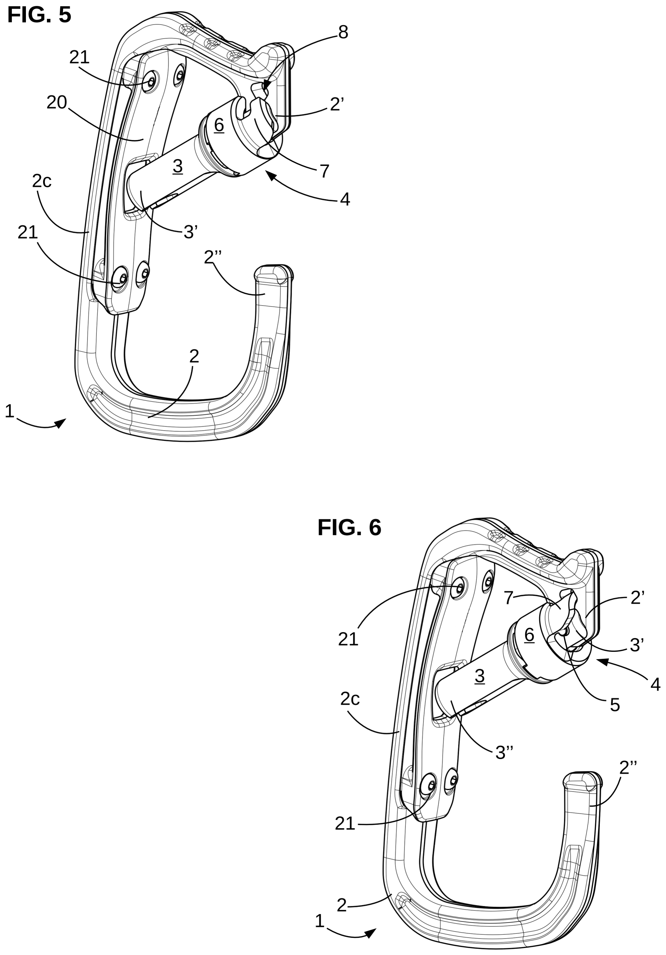

Le doigt 3 est monté mobile entre une position ouverte et une position fermée pour laisser ouverte ou fermer l'ouverture. Dans la position ouverte, le doigt 3 autorise l'insertion d'un outil dans le corps 2 ou autorise l'extraction de l'outil hors du corps 2. Dans la position fermée, le doigt 3 interdit l'insertion d'un outil dans le corps 2 et interdit l'extraction de l'outil hors du corps 2. Les figures 1 à 4 illustrent le doigt3 en position fermée alors que les figures 5 à 7 illustrent le doigt 3 en position ouverte. Lors du déplacement du doigt 3 depuis la position fermée jusqu'à une position ouverte, la première extrémité 3' du doigt 3 se déplace pour se rapprocher d'une portion centrale 2c du corps 2. La portion centrale 2c relie la première extrémité 2' et la deuxième extrémité 2".

Le mousqueton 1 possède un dispositif de verrouillage 4 qui est configuré pour figer la position du doigt 3 dans une position prédéfinie.

Le doigt 3 possède une première extrémité 3' et une deuxième extrémité 3" qui sont des extrémités opposées selon une direction longitudinale du doigt 3. La première extrémité 2' du corps 2 est accrochée à la première extrémité 3' du doigt 3 au moyen d'un arbre de pivotement 5. Le doigt 3 pivote autour de l'arbre de pivotement 5.

Le dispositif de verrouillage 4 présente une position verrouillée et une position déverrouillée. Dans la position verrouillée, le dispositif de verrouillage 4 fige la position du doigt 3. Lorsque le doigt 3 est dans la position ouverte et que le dispositif de verrouillage 4 bascule de la position déverrouillée à la position verrouillée, le dispositif de verrouillage 4 maintient le doigt 3 dans la position ouverte. Lorsque le doigt 3 est dans la position fermée et que le dispositif de verrouillage 4 bascule de la position déverrouillée à la position verrouillée, le dispositif de verrouillage 4 maintient le doigt 3 dans la position fermée. De manière préférentielle, le dispositif de verrouillage 4 est configuré pour bloquer le doigt 3 dans un nombre limité de positions, par exemple dans l'une des deux positions possibles.

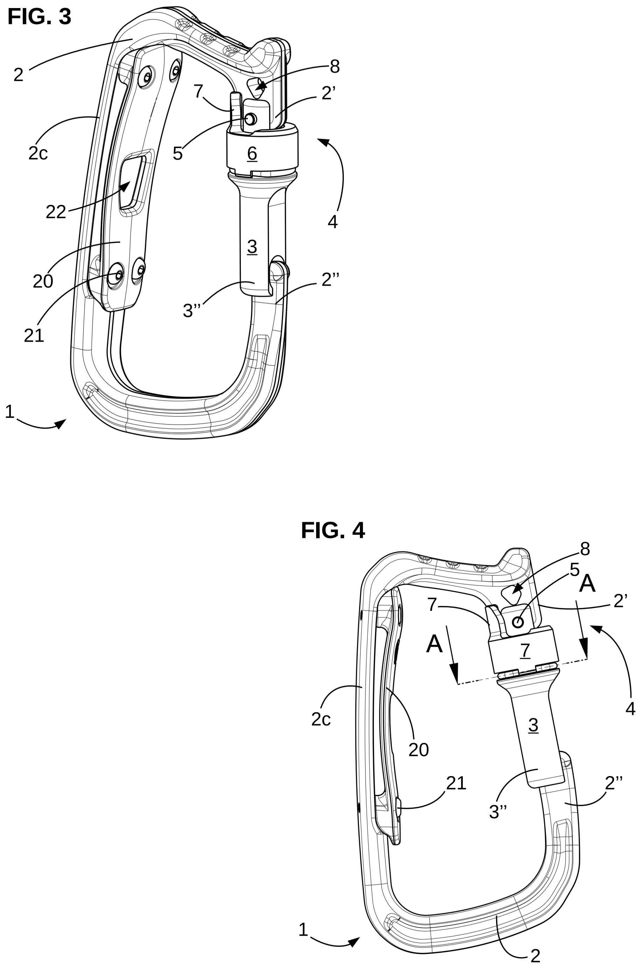

Lorsque le dispositif de verrouillage 4 est dans la position déverrouillée, le doigt 3 peut être déplacé librement entre la position ouverte et la position fermée. Lorsque le dispositif de verrouillage 4 est dans la position verrouillée, le dispositif de verrouillage 4 est en mesure de maintenir le doigt 3 dans la position ouverte ou dans la position fermée. Les figures 1, 2 et 5 illustrent le dispositif de verrouillage 4 en position déverrouillée. Les figures 3, 4, 6 et 7 illustrent le dispositif de verrouillage 4 en position verrouillée.

Le maintien du doigt 3 dans la position fermée permet d'éviter toute ouverture non-intentionnelle, c'est-à-dire permet de maintenir le ou les outils dans le corps 2 du mousqueton 1. Le maintien du doigt 3 dans la position ouverte permet d'accrocher facilement un outil avec le corps 2 et l'extraction de l'outil hors du corps 2.

Le dispositif de verrouillage 4 dans la position verrouillée permet de maintenir le doigt 3 dans la position ouverte ou dans la position fermée ce qui permet de faciliter l'utilisation du mousqueton selon les besoins. Dans une alternative de réalisation, le dispositif de verrouillage 4 est uniquement configuré pour verrouiller le doigt 3 dans la position ouverte.

Il est particulièrement avantageux que le même organe du dispositif de verrouillage 4 agisse pour définir la position verrouillée qui verrouille le doigt 3 lorsque le doigt 3 est dans la position ouverte et lorsque le doigt 3 est dans la position fermée.

Afin d'avoir un dispositif de verrouillage 4 compact, il est avantageux que le dispositif de verrouillage 4 soit installé sur le doigt 3. Dans la position déverrouillée, le dispositif de verrouillage 4 se déplace avec le doigt 3 lorsque le doigt 3 se déplace entre la position ouverte et la position fermée.

De manière avantageuse, le dispositif de verrouillage 4 est monté à pivotement autour de l'axe qui relie la première extrémité 3' et la deuxième extrémité 3". Le montage à pivotement permet de faciliter le blocage du doigt 3 dans la position ouverte ou dans la position fermée lorsque le doigt 3 est respectivement placé dans la position ouverte ou fermée.

Il est particulièrement avantageux que le dispositif de verrouillage 4 agisse mécaniquement sur la première extrémité 2' du corps 2 afin de maintenir le doigt 3 dans une position prédéfinie lorsque le dispositif de verrouillage 4 est dans la position verrouillée. Dans une configuration de l'art antérieur, le dispositif de verrouillage 4 agit sur la deuxième extrémité du doigt 2. Une telle configuration rend plus difficile le verrouillage dans la position ouverte.

Les efforts appliqués sur le doigt 3 sont différents selon que le doigt 3 est verrouillé en position fermée ou verrouillé en position ouverte. Il est avantageux de fournir un dispositif de verrouillage 4 qui résiste bien aux efforts appliqués tout en restant compact et facile d'utilisation. Il a été observé qu'il est avantageux de prévoir que le dispositif de verrouillage 4 soit sollicité en traction lorsque le doigt 3 est verrouillé en position fermée et que l'on cherche à déplacer le doigt 3 dans la position ouverte. Il est également avantageux que le dispositif de verrouillage 4 soit sollicité en compression lorsque le doigt 3 est verrouillé en position ouverte et que l'on cherche à déplacer le doigt 3 dans la position fermée.

Il est particulièrement avantageux que le dispositif de verrouillage 4 soit disposé dans la première extrémité 3' du doigt 3 car cette partie du doigt 3 est moins sollicitée lors de l'installation et de l'extraction des outils dans le mousqueton 1 ou hors du mousqueton 1. Cela permet d'éviter une activation non-désirée du dispositif de verrouillage 4. Il est préférable que la deuxième extrémité 3" du doigt 3 soit dépourvue du dispositif de verrouillage 4. Cela permet également de ne pas réduire l'angle d'ouverture du doigt 3.

Pour former un dispositif de verrouillage 4 qui est compact et qui ne réduit pas l'angle d'ouverture du doigt 3, il est avantageux que le dispositif de verrouillage 4 soit muni d'une virole 6 qui est installée pivotante autour du doigt 3. La virole 6 est installée dans la première extrémité 3' du doigt 3.

Dans un mode de réalisation préférentiel, le dispositif de verrouillage 4 possède un crochet 7. Le crochet 7 est monté saillant de la virole 6.

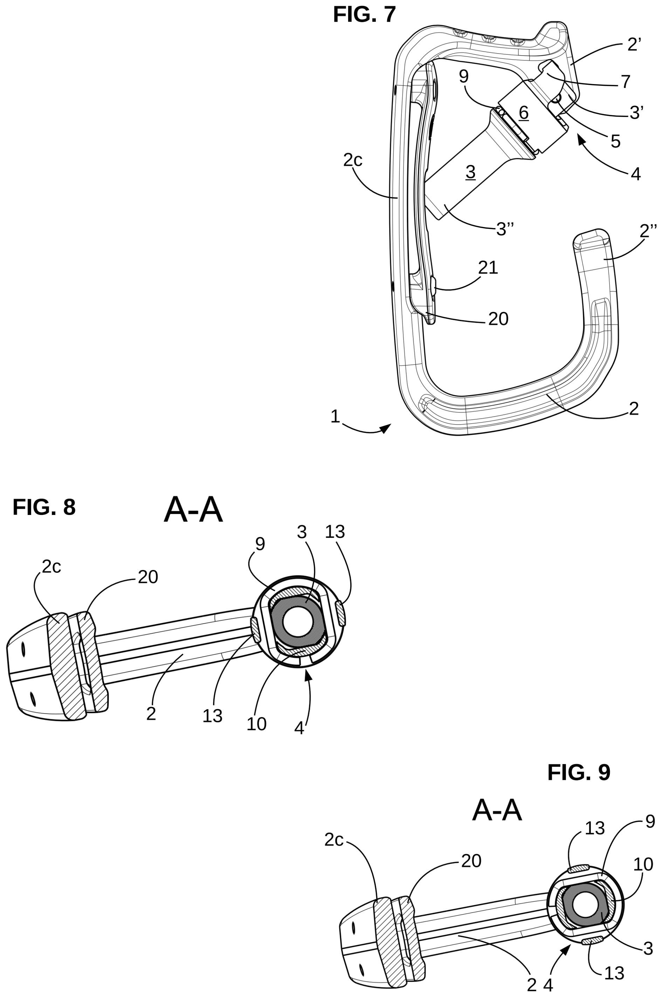

Dans la position verrouillée, le crochet 7 du dispositif de verrouillage 4 peut s'enfoncer dans un trou du corps 2 pour maintenir le doigt 3 dans la position choisie. Par exemple comme cela est illustré aux figures 6 et 7, lorsque le doigt 3 est dans la position ouverte et que le dispositif de verrouillage 4 est dans la position fermée, le crochet 7 s'enfonce dans un trou 8 aménagé dans le corps 2. Le crochet 7 installé dans le trou 8 maintient le doigt 3 dans la position ouverte. Un effort cherchant à déplacer le doigt 3 dans la position fermée se traduit par l'application d'un effort en traction sur le crochet 7.

Dans le mode de réalisation illustré, le corps 2 définit un seul trou 8 disposé pour coopérer avec le crochet 7 et figer le doigt 3 dans la position ouverte. Dans une alternative de réalisation non illustrée, le corps 2 définit deux trous. Un des trous permet de maintenir le doigt 3 dans la position ouverte tant que l'autre des trous permet de maintenir le doigt 3 dans la position fermée.

Il est particulièrement avantageux de prévoir que le crochet 7 pivote autour du doigt 3 et préférentiellement autour de l'axe longitudinal du doigt 3 afin de se déplacer entre la position verrouillée et la position déverrouillée.

Dans un mode de réalisation particulier, le crochet 7 possède une paroi externe destinée à venir en appui contre une paroi interne du corps 2 pour empêcher un déplacement du doigt 3 de la position fermée à la position ouverte. Une paroi interne du crochet 7 vient en appui contre la première extrémité du corps 2 pour empêcher un déplacement du doigt 3 de la position ouverte à la position fermée.

Pour faciliter l'actionnement du dispositif de verrouillage 4 et notamment son actionnement à une main, il est avantageux que le basculement entre la position verrouillée et la position déverrouillée corresponde à un pivotement de la virole 6 sur un angle inférieur à 360°. Il est particulièrement avantageux que le passage de la position verrouillée à la position déverrouillée du dispositif de verrouillage 4 se fasse dans le même sens indépendamment de la position du doigt 3. Il est également avantageux que le passage de la position déverrouillée à la position verrouillée du dispositif de verrouillage 4 se fasse dans le même sens indépendamment de la position du doigt 3. Il est encore avantageux que passage de la position déverrouillée à la position verrouillée du dispositif de verrouillage 4 se fasse dans un sens opposé au passage de la position verrouillée à la position déverrouillée. Cela permet à l'utilisateur de savoir rapidement et assurément comment est configuré le mousqueton et sans avoir à regarder le mousqueton.

Préférentiellement, le crochet 7 pivote d'un premier angle entre la position déverrouillée et la position verrouillée lorsque le doigt 3 est dans la position fermée. Le crochet 7 pivote d'un deuxième angle entre la position déverrouillée et la position verrouillée lorsque le doigt 3 est dans la position fermée. Le premier angle est supérieur au deuxième angle. En d'autres termes, lorsque le crochet 7 se déplace depuis la position déverrouillée jusqu'à la position verrouillée, le crochet 7 pivote sur un angle moins important lorsque le doigt 3 est dans la position ouverte en comparaison du pivotement lorsque le doigt 3 est dans la position fermée.

Dans une configuration préférentielle, lorsque le doigt 3 est dans la position fermée, une paroi externe du crochet 7 vient en vis-à-vis d'une paroi interne du corps 2. La paroi externe du crochet 7 vient en appui de la paroi interne du corps 2 ce qui empêche de pivoter le doigt 3 depuis la position fermée jusqu'à la position ouverte. Dans le mode de réalisation illustré, la paroi interne du corps 2 définit un mur et la paroi externe du crochet 7 prend appui contre le mur pour empêcher le déplacement du doigt 3 hors de la position fermée. Lorsque le doigt 3 est verrouillé dans la position fermée, un effort appliqué sur le doigt 3 pour ouvrir le doigt 3 se traduit pas un effort en compression. L'enfoncement du crochet 7 plus profondément à l'intérieur de l'épaisseur du corps 2 permet de supporter des efforts plus importants sans trop solliciter l'extrémité du crochet 7.

Il est avantageux de prévoir que lorsque le crochet 7 se déplace depuis la position déverrouillée jusqu'à la position verrouillée, le corps 2 forme une butée quand le doigt 3 est en position fermée. La butée empêche le déplacement du crochet 7 sur une distance moins importante lorsque le doigt 3 est en position ouverte en comparaison du doigt 3 en position fermée.

Le crochet 7 s'enfonçant plus profondément dans l'épaisseur du corps 2, une quantité de manière plus importante est sollicitée pour maintenir le doigt 3 dans la position fermée.

Lorsque le doigt 3 est en position fermée et lorsque le dispositif de verrouillage 4 est en position verrouillée, le dispositif de verrouillage 4 est dépourvu d'un appui sur la portion centrale 2c du corps 2. Il est connu de l'art antérieur de nombreuses configurations où le dispositif de verrouillage 4 possède un bras pivotant qui appuie sur le corps 2 pour maintenir le doigt 3 dans la position fermée. Cette configuration n'est pas intéressante car une partie de l'espace interne du mousqueton n'est pas accessible. En outre, le bras n'est pas en mesure de maintenir le doigt 3 en position ouverte et il forme un élément de prise lorsqu'il s'étend hors du plan du mousqueton.

Il est avantageux que le doigt 3 bloqué dans la position ouverte possède une deuxième extrémité 3" qui est en contact ou très proche d'une paroi du corps 2 par exemple proche d'une paroi centrale 2c du corps 2 afin de limiter les risques d'accrochage d'un outil avec le doigt 3 lorsque l'outil quitte l'intérieur du mousqueton 1. Cela évite de déformer le crochet 7 en forçant pour ouvrir le doigt 3 ce qui pourrait empêcher d'utiliser le crochet 7 pour verrouiller le doigt 3 en position ouverte.

Il est avantageux que le trou 8 formé dans le corps 2 et destiné à recevoir le crochet 7 définisse un jeu fonctionnel avec le crochet 7. Le jeu fonctionnel autorise un léger déplacement du doigt 3. Cela permet de ne pas trop solliciter le crochet 7 lorsque l'on introduit un outil à l'intérieur du mousqueton 1 et que l'outil ou la main de l'utilisateur sollicite le doigt 3. Il est encore plus avantageux que le jeu fonctionnel entre le trou 8 et le crochet 7 autorise le doigt 3 à venir en butée contre une paroi centrale 2c du corps 2 afin que le crochet 7 soit uniquement sollicité pour empêcher la fermeture du doigt 3 et non pour empêcher une ouverture du doigt 3 au-delà d'une position seuil. Dans une alternative de réalisation, une autre partie du dispositif de verrouillage 4 peut venir en appui contre le corps 2 pour définir l'ouverture maximale du doigt 3 lorsque le crochet 7 est introduit dans le trou 8.

Les figures 6 et 7 illustrent la deuxième extrémité 3" du doigt 3 qui est en appui contre la partie centrale 2c du corps 2 ou proche de la partie centrale 2c lorsque le doigt 3 est dans sa position d'ouverture maximale et illustrent la virole 6 qui est en appui contre la paroi de première extrémité 2' du corps 2 dans la position d'ouverture maximale. Dans la position d'ouverture maximale, le crochet 7 est séparé des parois latérales du trou 8 par un jeu fonctionnel.

Dans un mode de réalisation non illustré, le dispositif de verrouillage 4 s'étend sur toute la longueur du doigt 3. Lorsque le doigt 3 est dans la position fermée, la deuxième extrémité 2" du corps 2 est disposée dans une ouverture aménagée dans la deuxième extrémité 3" du doigt 3. Lorsque le dispositif de verrouillage 4 est dans la position verrouillée, le dispositif de verrouillage 4 maintient la deuxième extrémité 2" du corps 2 dans l'ouverture aménagée dans la deuxième extrémité 3" du doigt 3. Par exemple, le dispositif de verrouillage 4 tourne autour du doigt 3 pour installer un obturateur qui empêche la sortie de la deuxième extrémité du corps 2. L'obturateur est disposé à la première extrémité 3' du doigt 3

Avantageusement, le dispositif de verrouillage 4 possède uniquement deux positions stables qui correspondent à la position verrouillée et à la position déverrouillée. Le dispositif de verrouillage 4 possède une position instable entre la position verrouillée et la position déverrouillée qui tend à déplacer le dispositif de verrouillage 4 vers la position verrouillée ou la position déverrouillée. Dans le mode de réalisation illustré, la virole 6 possède une première position stable correspondant à la virole 6 dans la position déverrouillée et une deuxième position stable correspondant à la virole 6 dans la position verrouillée. Entre les deux positions stables, la virole 6 est dans une position instable et tend à atteindre l'une des deux positions stables. Cette configuration permet de choisir si le dispositif de verrouillage 4 est bloqué dans la position verrouillée ou bloqué dans la position déverrouillée.

Il est particulièrement avantageux que le dispositif de verrouillage 4 possède un ressort 9 qui appuie sur la virole 6 du dispositif de verrouillage 4 et qui appuie sur le doigt 3 ou une tête 10 montée autour du doigt 3. La tête 10 est installée entre le ressort 9 et le doigt 3. Dans le mode de réalisation illustré aux figures 8, 9 et 10, le mousqueton 1 possède un doigt 3 et la tête 10 tourne autour du doigt 3. La tête 10 est préférentiellement un élément déformable selon une direction perpendiculaire à l'axe de pivotement. La forme du doigt 3 et la forme de la tête 10 en association avec le ressort 9 définissent une position stable pour la position verrouillée et une position stable pour la position déverrouillée. Dans le mode de réalisation particulier illustré, le doigt 3 présente plusieurs méplats, par exemple au moins deux méplats qui définissent les deux positions stables. La tête 10 est montée fixement avec la virole 6 pour tourner autour du doigt 3 avec la virole 6 tout en autorisant la déformation de la tête 10 par rapport au doigt 3 et par rapport à la virole 6. La tête 10 permet d'adapter la forme du ressort 9 et la forme du doigt 3. Il est avantageux que la tête 10 possède au moins une fente 11 afin de faciliter la déformation de la tête 10 perpendiculairement à l'axe de pivotement de la virole 6 autour du doigt 3. La virole 6 définit préférentiellement une empreinte 12 qui est non circulaire et le ressort 9 appuie sur l'empreinte 12.

Dans un mode de réalisation, le ressort 9 est distinct de la virole 6 et distinct du doigt 3. Le ressort 9 applique un effort sur la tête 10 afin de mieux maitriser la déformation de la tête 10. Dans une autre configuration la virole 6 est déformable élastiquement et agit comme un ressort.

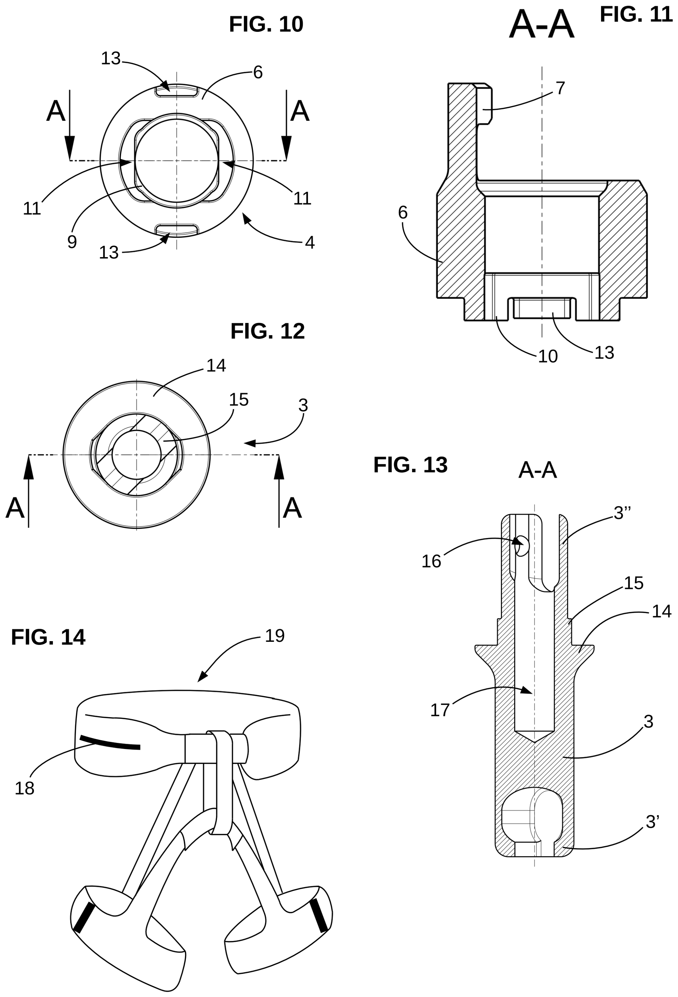

La figure 10 illustre une vue de dessous de la virole 6 qui est munie d'une ou plusieurs pates 13. Les pates 13 pivotent autour du doigt 3 pour maintenir le ressort 9 en position autour du doigt 3. Avantageusement, la tête 10 est montée immobile par rapport aux pates 13. La virole 6 est creuse pour laisser passer le doigt 3. Les pates 13 forment des patins qui glissent sur le doigt 3 pour éviter de trop solliciter le ressort 9 en compression entre le doigt 3 et la virole 6 selon l'axe longitudinal du doigt 3.

La figure 11 illustre une vue en coupe longitudinale de la virole 6 qui possède le crochet 7. La virole 6 peut être un élément monobloc. La virole 6 peut définir une pate 13 qui est destinée à s'ancrer dans la tête 10 afin d'entrainer la tête 10 en rotation autour du doigt 3 lorsque la virole 6 tourne autour du doigt 3. La virole 6 est un élément creux qui est traversé par le doigt 3 et qui reçoit la tête 10 entre le doigt 3 et la virole 6. La tête 10 peut être monobloc avec la virole 6.

La figure 12 illustre une vue de dessus d'un mode de réalisation particulier du doigt 3. Dans sa première extrémité 3', le doigt 3 définit avantageusement un plateau 14 destiné à recevoir le ressort 9, la tête 10 et la virole 6. En saillie du plateau 14, le doigt 3 définit une zone saillante 15 qui présente une section non circulaire et de préférence une section avec un ou plusieurs méplats, préférentiellement plusieurs méplats qui permettent de définir les positions stables du dispositif de verrouillage 4.

Il est avantageux que le doigt 3 définisse une ouverture 16 destinée à recevoir l'arbre de pivotement 5 pour réaliser le pivotement du doigt 3, mais d'autres configurations sont possibles.

Il est avantageux que le doigt 3 soit creux dans sa première extrémité 3', la zone creuse peut recevoir un élément de ressort qui appuie sur le corps 2 pour solliciter le doigt 3 vers la position fermée. L'ouverture 17 dans la première extrémité 3' du doigt 3 pour recevoir un élément de ressort est une réalisation conventionnelle.

Le mousqueton 1 possédant une position où le doigt 3 est bloqué en position ouverte, il est avantageux que le mousqueton 1 soit en métal, par exemple en alliage d'aluminium ou en acier afin de mieux supporter les efforts appliqués.

Afin de former un dispositif de verrouillage 4 qui soit compact, facile d'utilisation et économique, il est avantageux que le dispositif de verrouillage 4 soit dépourvu ou interdise un déplacement en translation selon la direction longitudinale du doigt 3.

Par exemple l'arbre de pivotement 5 et/ou la forme de la première extrémité 2' peut empêcher la translation.

Le verrouillage et le déverrouillage du doigt 3 peuvent être réalisés uniquement avec un mouvement en pivotement. En alternative, le dispositif de verrouillage 4 peut imposer un déplacement plus complexe par rapport au doigt 3 pour passer de la position déverrouillée à la position verrouillée et/ou pour passer de la position verrouillée à la position déverrouillée.

Afin de former un dispositif de verrouillage 4 facile d'utilisation avec une seule main, il est avantageux que le passage entre la position verrouillée et la position déverrouillée ne nécessite pas plus qu'un tour complet du dispositif de verrouillage 4, plus préférentiellement pas plus d'un demi-tour du dispositif de verrouillage 4 et encore plus préférentiellement un déplacement sur moins de 120° voire un quart de tour c'est-à-dire 90°.

Dans le mode de réalisation illustré, le dispositif de verrouillage 4 autorise le passage de la position verrouillée à la position déverrouillée uniquement lorsque le doigt 3 est dans l'une des deux positions autorisées. Dans les autres positions du doigt 3, le dispositif de verrouillage 4 interdit d'atteindre la position verrouillée.

Dans la configuration illustrée, le corps 2 définit un seul trou 8 destiné à recevoir le crochet 7 et une paroi interne du corps 2 forme un mur destiné à verrouiller le doigt 3 dans la position fermée lorsque le doigt 3 est dans la position verrouillée. Le corps 2 peut être dépourvu d'un autre trou disposé le long du cheminement du crochet 7 entre le trou 8 et le mur afin d'empêcher le dispositif de verrouillage 4 de verrouiller le doigt 3 hors de l'une des deux positions autorisées.

Il est particulièrement avantageux d'avoir un crochet 7 incurvé afin de suivre la courbure de la paroi externe du doigt 3 et d'avoir un crochet 7 qui est proche de la paroi externe du doigt 3. L'existence d'un crochet 7 augmente le risque de voir le crochet 7 s'accrocher à un élément extérieur de manière non-intentionnelle. Le pivotement du crochet 7 à proximité immédiate du doigt 3 rend sa sollicitation non-intentionnelle plus difficile. En outre, lorsque la position verrouillée du crochet 7 correspond au crochet 7 disposé à l'intérieur du volume interne du mousqueton 1, le risque de sollicitation non-intentionnelle est faible.

Dans une configuration avantageuse et illustrée aux figures 1 à 9, le mousqueton 1 est muni d'un moyen de blocage d'un élément filaire 18, de préférence une sangle. Le moyen de blocage et le corps 2 définissent ensemble une fente destinée au passage de l'élément filaire 18 ou un anneau qui assure la fixation de l'élément filaire 18 et de préférence le coincement de l'élément filaire 18. Le moyen de blocage permet d'accrocher le mousqueton 1 à un élément filaire 18, par exemple une sangle d'un harnais d'encordement 19 ce qui réalise la fixation du mousqueton 1 à un élément de référence, par exemple le harnais d'encordement 19. Cette configuration est particulièrement avantageuse lorsque le mousqueton 1 est verrouillé avec le doigt 3 en position ouverte. Le moyen de blocage permet d'accrocher fixement le mousqueton 1 indépendamment de l'état du doigt 3.

Dans un mode de réalisation préférentiel, le moyen de blocage possède une tige 20 disposée à l'intérieur du volume délimité par le corps 2 et le doigt 3. Cette configuration est avantageuse car l'élément filaire 18 se trouve à l'intérieur du mousqueton 1 et il ne peut pas partir lorsque le doigt 3 est en position fermée.

La tige 20 peut être fixée au corps 2 à une extrémité ce qui permet de transformer la tige 20 en une languette mobile définissant une fente. Il est avantageux que la fente s'étende au-delà de la deuxième extrémité du doigt 3 lorsque le doigt 3 est dans la position d'ouverture maximale. En d'autres termes, la fente s'étend au-dessus de la deuxième extrémité du doigt 3, la première extrémité 2' du corps 2 étant disposée au-dessus de la deuxième extrémité 2" du corps 2. En cas de défaillance du moyen de blocage, l'élément filaire 18 se trouve à l'intérieur de l'anneau délimité par le corps 2 et le doigt 3.

Le moyen de blocage peut être formé par une tige 20 qui est accrochée au corps 2. La tige 20 peut être accrochée à une extrémité ou à ses deux extrémités opposées. L'élément filaire 18 est installé entre le corps 2 et la tige 20 et la tige 20 est accrochée fixement au corps 2 à ses deux extrémités opposées pour empêcher toute séparation. Dans un autre mode de réalisation, une extrémité supérieure de la languette est accrochée au corps 2 et la tige 20 est déformable élastiquement en flexion. Dans une position de repos, l'extrémité inférieure est en appui contre le corps 2 pour fermer la fente. L'extrémité inférieure peut être séparée du corps 2 pour ouvrir la fente et autoriser l'insertion ou l'extraction de l'élément filaire 18. La tige 20 peut être accrochée au corps 2 par des vis 21 ou tout autre élément de fixation adapté.

Lorsque la tige 20 est accrochée à une seule de ses extrémités, elle forme une languette déformable qui autorise l'insertion et l'extraction d'un élément filaire 18. Lorsque la tige 20 est accrochée au corps 2 à ses deux extrémités, la tige 20 et le corps 2 définissent un anneau fermé qui maintient l'élément filaire 18 accroché au mousqueton 1.

De manière avantageuse, lorsque le doigt 3 est verrouillé en position ouverte, le doigt 3 forme un obstacle au déplacement de la tige 20 depuis une position fermée maintenant l'élément filaire 18 entre le corps 2 et la tige 20 vers une position ouverte autorisant une extraction de l'élément filaire 18. En alternative ou en complément, la tige 20 peut définir une lumière 22 qui permet au doigt 3 de s'enfoncer à l'intérieur de la tige 20. Dans la position ouverte, le doigt 3 peut être en contact de l'élément filaire 18 ce qui complique son extraction hors du moyen de blocage.

L'installation de la deuxième extrémité 3" du doigt 3 dans la lumière 22 permet de bloquer les déplacements de la deuxième extrémité 3" selon des directions perpendiculaires au plan de pivotement, c'est-à-dire le plan qui reçoit le pivotement du doigt 3. Cela permet de réduire les contraintes appliquées sur l'arbre de pivotement 5 lorsque le doigt 3 est verrouillé dans la position ouverte.

L'installation de la tige 20 dans le volume intérieur du mousqueton 1 est particulièrement avantageuse car en cas de mauvaise manipulation entrainant la sortie de l'élément filaire 18 hors du moyen de blocage, l'élément filaire 18 peut rester à l'intérieur du mousqueton 1. L'élément filaire 18 et le mousqueton 1 restent accrochés ensemble.

Dans la position fermée, l'élément ressort sollicite le doigt 3 pour que la deuxième extrémité 3" se trouve au contact de la deuxième extrémité 2" du corps 2 et ferme l'anneau défini par le mousqueton 1. La position du doigt 3 par rapport au corps 2 est définie et il en est de même pour la position du dispositif de verrouillage 4 par rapport au corps 2. Il est alors possible d'actionner le dispositif de verrouillage 4 vers la position verrouillée et d'atteindre la position verrouillée.

Dans la position ouverte, l'utilisateur agit sur le doigt 3 et compense l'action de l'élément de ressort. La position du doigt 3 est moins bien définie. Il est avantageux que la première extrémité 2' du corps 2 forme une butée de fin de course pour l'ouverture du doigt 3. La première extrémité 3' du doigt 3 ou le dispositif de verrouillage 4 sont en appuie sur la partie du corps 2 qui forme la butée de fin de course pour éviter que la deuxième extrémité 3" du doigt 3 soit au contact du corps 2. Cela rend plus facile l'utilisation de la tige 20 et notamment l'installation de l'élément filaire 18. Une fois la butée de fin de course atteinte, l'utilisateur sait qu'il peut déplacer le dispositif de verrouillage 4 depuis la position déverrouillée jusqu'à la position verrouillée et atteindre le trou 8 ou tout autre moyen permettant le verrouillage du doigt 3.

## Revendications

1. Mousqueton (1) comportant :
- un corps (2) possédant une première extrémité (2') et une deuxième extrémité (2") ;
- un doigt (3), le doigt (3) étant monté mobile à pivotement par rapport au corps (2), le doigt (3) étant mobile entre une position ouverte et une position fermée ;
- un dispositif de verrouillage (4) présentant une position verrouillée et une position déverrouillée ;
dans lequel, dans la position déverrouillée, le doigt (3) est libre de se déplacer entre la position ouverte et la position fermée ;
dans lequel, lorsque le doigt (3) est en position fermée, le basculement du dispositif de verrouillage (4) de la position déverrouillée à la position verrouillée maintient le doigt (3) dans la position fermée ;
**caractérisé en ce que** lorsque le doigt (3) est dans la position ouverte, le basculement du dispositif de verrouillage (4) de la position déverrouillée à la position verrouillée maintient le doigt (3) dans la position ouverte.

2. Mousqueton (1) selon la revendication 1 dans lequel le dispositif de verrouillage (4) est accroché au doigt (3) et suit le déplacement le doigt (3) entre la position ouverte et la position fermée.

3. Mousqueton (1) selon l'une des revendications 1 et 2 dans lequel, lorsque le doigt (3) est dans la position ouverte, le dispositif de verrouillage (4) dans la position verrouillée applique un effort sur la première extrémité (2') du corps (2).

4. Mousqueton (1) selon l'une des revendications 2 et 3 dans lequel le dispositif de verrouillage (4) est monté pivotant entre la position verrouillée et la position déverrouillée autour d'un axe qui relie une première extrémité (3') du doigt (3) et une deuxième extrémité (3") du doigt (3) et dans lequel le dispositif de verrouillage (4) définit un crochet (7) s'accrochant à la première extrémité (2') du corps (2) lorsque le doigt (3) est dans la position ouverte.

5. Mousqueton (1) selon la revendication 4 dans lequel, lorsque le dispositif de verrouillage (4) est en position verrouillée, le crochet (7) possède une paroi externe destinée à venir en appui contre une paroi interne du corps (2) pour empêcher un déplacement du doigt (3) de la position fermée à la position ouverte et dans lequel une paroi interne du crochet (7) vient en appui contre la première extrémité du corps (2) pour empêcher un déplacement du doigt (3) de la position ouverte à la position fermée.

6. Mousqueton (1) selon l'une des revendications 4 et 5 dans lequel la première extrémité (2') du corps (2) définit un trou (8) recevant le crochet (7) lorsque le dispositif de verrouillage (4) est dans la position verrouillée et lorsque le doigt (3) est dans la position ouverte.

7. Mousqueton (1) selon l'une quelconque des revendications 4 à 6 dans lequel le crochet (7) pivote d'un premier angle entre la position déverrouillée et la position verrouillée lorsque le doigt (3) est dans la position fermée et dans lequel le crochet (7) pivote d'un deuxième angle entre la position déverrouillée et la position verrouillée lorsque le doigt (3) est dans la position fermée, le premier angle étant supérieur au deuxième angle.

8. Mousqueton (1) selon l'une quelconque des revendications 1 à 7 dans lequel le dispositif de verrouillage (4) présente un état instable entre la position verrouillée et la position déverrouillée, le dispositif de verrouillage (4) possédant un ressort (9) sollicitant une virole (6) et le doigt (3) pour quitter la position instable vers la position verrouillée ou la position déverrouillée.

9. Mousqueton (1) selon la revendication 8 lorsqu'elle dépend de la revendication 7 dans lequel la première extrémité (2') du corps (2) forme une butée, le ressort (9) appliquant un effort sur la première extrémité (2') du corps (2) lorsque le doigt (3) est en position ouverte.

10. Mousqueton (1) selon l'une quelconque des revendications 1 à 9 dans lequel la première extrémité (2') du corps (2) forme une butée de fin de course configurée pour limiter l'angle d'ouverture du doigt (3) dans la position ouverte, la butée de fin de course étant en contact du doigt (3) ou du dispositif de verrouillage (4).

11. Procédé d'utilisation d'un mousqueton comportant les étapes suivantes :
- fournir un mousqueton (1) selon l'une quelconque des revendications précédentes ;
- placer le dispositif de verrouillage (4) dans la position verrouillée lorsque le doigt (3) dans la position ouverte afin de bloquer le doigt (3) dans la position ouverte.
